(19) Europäisches Patentamt
European Patent Office
Office européen des brevets

(11) **EP 4 280 414 A1**

(12) **EUROPÄISCHE PATENTANMELDUNG**

(43) Veröffentlichungstag:
**22.11.2023 Patentblatt 2023/47**

(21) Anmeldenummer: **22173948.5**

(22) Anmeldetag: **18.05.2022**

(51) Internationale Patentklassifikation (IPC):
**H02J 7/00** (2006.01)

(52) Gemeinsame Patentklassifikation (CPC):
**H02J 7/0063; H02J 7/0019; H02J 7/0024**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Hilti Aktiengesellschaft
9494 Schaan (LI)**

(72) Erfinder: **Lacher, Michael
86830 Schwabmünchen (DE)**

(74) Vertreter: **Hilti Aktiengesellschaft
Corporate Intellectual Property
Feldkircherstrasse 100
Postfach 333
9494 Schaan (LI)**

(54) **ELEKTRISCHE SCHALTUNG ZUM STEUERN VON ENERGIEVERSORGUNGSVORRICHTUNG IN EINEM ELEKTRISCHEN GERÄT UND ELEKTRISCHES GERÄT**

(57)      Die Erfindung betrifft eine elektrische Schaltung zum Steuern einer Energieentnahme aus einer ersten Energieversorgungsvorrichtung und aus einer zweiten Energieversorgungsvorrichtung in einem elektrischen Gerät, insbesondere in einer Werkzeugmaschine. Die elektrische Schaltung umfasst eine erste Energieversorgungsvorrichtung und eine zweite Energieversorgungsvorrichtung, sowie ein erstes Schaltelement, ein zweites Schaltelement und ein drittes Schaltelement, eine Spule und zwei Anschluss-Stellen, wobei die Spule in Reihe geschaltet mit der ersten Energieversorgungsvorrichtung und der zweiten Energieversorgungsvorrichtung vorliegt und wobei das erste Schaltelement dazu eingerichtet ist, die erste Energieversorgungsvorrichtung und die Spule zu überbrücken, und das zweite Schaltelement dazu eingerichtet ist, die zweite Energieversorgungsvorrichtung und die Spule zu überbrücken. Mit der elektrischen Schaltung ist es vorteilhafterweise möglich, eine Ausgangsspannung bereitzustellen, die größer ist als eine Summe der Spannungen der beiden Energieversorgungsvorrichtungen. In einem zweiten Aspekt betrifft die Erfindung eine Werkzeugmaschine mit einer solchen elektrischen Schaltung.

Fig. 1

**Beschreibung**

Die Erfindung betrifft eine elektrische Schaltung zum Steuern einer Energieentnahme aus einer ersten Energieversorgungsvorrichtung und aus einer zweiten Energieversorgungsvorrichtung in einem elektrischen Gerät, insbesondere in einer Werkzeugmaschine. Die elektrische Schaltung umfasst eine erste Energieversorgungsvorrichtung und eine zweite Energieversorgungsvorrichtung, sowie ein erstes Schaltelement, ein zweites Schaltelement und ein drittes Schaltelement, eine Spule und zwei Anschluss-Stellen, wobei die Spule in Reihe geschaltet mit der ersten Energieversorgungsvorrichtung und der zweiten Energieversorgungsvorrichtung vorliegt und wobei das erste Schaltelement dazu eingerichtet ist, die erste Energieversorgungsvorrichtung und die Spule zu überbrücken, und das zweite Schaltelement dazu eingerichtet ist, die zweite Energieversorgungsvorrichtung und die Spule zu überbrücken. Mit der elektrischen Schaltung ist es vorteilhafterweise möglich, eine Ausgangspannung bereitzustellen, die größer ist als eine Summe der Spannungen der beiden Energieversorgungsvorrichtungen. In einem zweiten Aspekt betrifft die Erfindung ein elektrisches Gerät, vorzugsweise eine Werkzeugmaschine, mit einer solchen elektrischen Schaltung.

**Hintergrund der Erfindung:**

Im Stand der Technik sind elektrische Geräte, wie Werkzeugmaschinen, bekannt, mit denen unterschiedliche Arbeiten durchgeführt werden können. Beispielsweise sind Bohrhämmer, Meißelgeräte, Trenn- oder Winkelschleifer, Schraubgeräte oder Kernbohrgeräte bekannt, bei denen jeweils ein Werkzeug durch einen Motor angetrieben wird. Eine Energieversorgung kann über einen Netzanschluss oder mit Energieversorgungsvorrichtungen, Batterien oder Akkumulatoren ("Akkus") bereitgestellt werden.

Es sind eine Reihe von Anwendungsfällen solcher Werkzeugmaschinen bekannt, bei denen hohe Leistungen erforderlich sind, um die entsprechenden Arbeiten durchzuführen. Bei Werkzeugmaschinen, deren Energieversorgung von einer Energieversorgungsvorrichtung gebildet wird, kann es vorkommen, dass die für die Arbeit erforderliche Leistung die maximal mögliche Abgabeleistung der Energieversorgungsvorrichtung übersteigt. Um dieser Herausforderung zu begegnen, werden solche Werkzeugmaschinen häufig mit einer Schnittstelle für zwei Energieversorgungsvorrichtungen ausgestattet, um mit zwei Energieversorgungsvorrichtungen, die in Reihe geschaltet werden können, die gewünschte Leistung bereitstellen zu können.

Bei der Arbeit mit Werkzeuggeräten mit zwei oder mehr Energieversorgungsvorrichtungen kann aber folgendes Problem auftreten: es kann zu Situationen kommen, in denen der Ladungszustand ("State of Charge", SOC) der Energieversorgungsvorrichtungen nicht gleich ist. Eine ähnliche Situation kann auch dann auftreten, wenn unterschiedliche Typen von Energieversorgungsvorrichtungen verwendet werden, beispielsweise eine Energieversorgungsvorrichtung mit 5 Ampèrestunden (Ah) und eine Energieversorgungsvorrichtung mit 10 Ah. Wenn beispielsweise eine der Energieversorgungsvorrichtungen ganz oder teilweise entladen ist, kann für die Werkzeugmaschine nicht über den gesamten Arbeitszeitraum die volle Leistung erbracht werden. Sobald eine der Energieversorgungsvorrichtungen vollständig entladen ist, kann bei einer Reihenschaltung der Energieversorgungsvorrichtungen keine weitere Leistung aus dieser Energieversorgungsvorrichtung entnommen werden. Die Arbeit mit der Werkzeugmaschine muss dann - trotz möglicherweise vorhandener Restladung in der anderen Energieversorgungsvorrichtung - beendet werden.

Insbesondere wird die für die Arbeit mit der Werkzeugmaschine zur Verfügung stehende Energie bzw. Leistung durch die kleinste Ladungsmenge bestimmt, die bei mehreren Energieversorgungsvorrichtungen in einer der Energieversorgungsvorrichtungen enthalten ist. Mit anderen Worten bestimmt die Energieversorgungsvorrichtung mit dem geringsten SOC-Wert die für die Werkzeugmaschine zur Verfügung stehende Leistung und die Reichweite, mit der Arbeiten mit der Werkzeugmaschine durchgeführt werden können.

Aufgabe der vorliegenden Erfindung ist es, die vorstehend beschriebenen Mängel und Nachteile des Standes der Technik zu überwinden und ein verbessertes elektrisches Gerät und eine elektrische Schaltung zum Steuern einer Energieentnahme aus einer ersten Energieversorgungsvorrichtung und aus einer zweiten Energieversorgungsvorrichtung in einem elektrischen Gerät, insbesondere in einer Werkzeugmaschine, bereitzustellen, mit denen die Energieentnahme aus den einzelnen Energieversorgungsvorrichtungen unterschiedlich gesteuert werden kann.

Die Aufgabe wird gelöst durch den Gegenstand der unabhängigen Ansprüche. Vorteilhafte Ausführungsformen des erfindungsgemäßen Gegenstands werden in den abhängigen Ansprüchen beschrieben.

**Beschreibung der Erfindung:**

Die Aufgabe wird dabei in einem ersten Aspekt durch eine elektrische Schaltung zum Steuern einer Energieentnahme aus einer ersten Energieversorgungsvorrichtung und aus einer zweiten Energieversorgungsvorrichtung in einem elektrischen Gerät, insbesondere in einer Werkzeugmaschine gelöst. Die elektrische Schaltung umfasst eine erste Energieversorgungsvorrichtung und eine zweite Energieversorgungsvorrichtung, sowie ein erstes Schaltelement, ein zweites Schaltelement und ein drittes Schaltelement, eine Spule und zwei Anschluss-Stellen. Die Spule liegt in Reihe geschaltet mit der ersten Energieversorgungsvorrichtung und der zweiten Energieversorgungsvorrichtung vor und das erste Schaltelement ist dazu eingerichtet, die erste Energieversorgungsvorrichtung und die Spule zu überbrücken, während das zweite Schaltelement dazu eingerichtet ist, die zweite Energieversorgungsvorrichtung und die Spule zu überbrücken. Die vorgeschlagene elektrische Schaltung ist vorteilhafterweise in der Lage, Ladungen zwischen den Energieversorgungsvorrichtungen auszugleichen, wenn die Schaltelemente entsprechend geschaltet sind.

Durch das Schließen des ersten Schaltelements wird die Spule mit elektrischer Energie aus der ersten Energieversorgungsvorrichtung aufgeladen. Die Energiemenge bzw. die Ladung steigt dabei im Wesentlichen proportional mit der Ladezeit t an. Analog dazu wird durch das Schließen des zweiten Schaltelements die Spule mit elektrischer Energie aus der zweiten Energieversorgungsvorrichtung aufgeladen. Auch hier steigt die Energiemenge bzw. die Ladung im Wesentlichen proportional mit der Ladezeit t an. Sind das erste und zweite Schaltelement geschlossen, kann die in der Spule gespeicherte elektrische Energie durch Schließen des dritten Schaltelements in den Verbraucherkreis entladen werden. Da das Verhältnis der Einschaltzeiten des ersten und des zweiten Schaltelements vorzugsweise die Entladungsmenge der ersten und zweiten Energieversorgungsvorrichtung steuert, kann über ungleiche Einschaltzeiten und/oder ungleiche Entladung der Ladungszustand der beiden Energieversorgungsvorrichtungen angeglichen werden.

Die elektrische Schaltung ist darüber hinaus in der Lage, eine Ausgangsspannung U_B der elektrischen Schaltung, die vorzugsweise an den Anschluss-Stellen der elektrischen Schaltung anliegt, hochzusetzen bzw. auf einen Wert zu erhöhen, der größer ist als die Summe der Spannungen der beiden Energieversorgungsvorrichtungen. Die vorgeschlagene Schaltung kann im Sinne der Erfindung bevorzugt auch als "Boost-Schaltung" bezeichnet werden, wobei die Fähigkeit, die Spannung innerhalb der vorgeschlagenen Schaltung zu boostern, insbesondere durch die Spule und ihre Anordnung innerhalb der vorgeschlagenen Schaltung bewirkt wird. Die Spule liegt in Reihe mit den Energieversorgungsvorrichtungen angeordnet vor. Die Erfindung betrifft somit insbesondere eine Boost-Konverter für zwei Energieversorgungsvorrichtungen mit einer Ladungsausgleichsfunktion, wobei die Energieversorgungsvorrichtungen vorzugsweise in einem elektrischen Gerät, zum Beispiel in einer Werkzeugmaschine, angeordnet sind. Der Ausgleich von Ladungen zwischen Energieversorgungsvorrichtungen bzw. zwischen den Zellen einer Energieversorgungsvorrichtung wird im Sinne der Erfindung bevorzug auch als "Balancing" bezeichnet.

Mit der Erfindung kann es insbesondere ermöglicht werden, dass die Energieentnahme aus den Energieversorgungsvorrichtungen unterschiedlich gesteuert werden kann. Das bedeutet im Sinne der Erfindung bevorzugt, dass aus den Energieversorgungsvorrichtungen unterschiedlich viel Energie pro Zeiteinheit entnommen werden kann. Auf diese Weise kann vorteilhafterweise auch ermöglicht werden, unterschiedliche Ladungszustände in den Energieversorgungsvorrichtungen im Sinne eines "Balancings" auszugleichen. Vorteilhafterweise kann dadurch die in den Energieversorgungsvorrichtungen vorhandene bzw. gespeicherte Energie bzw. Ladung besser genutzt werden, indem die Energie und/oder Ladung mit einer höheren Spannung für das elektrische Gerät bereitgestellt bzw. verfügbar gemacht werden kann.

Durch die Anordnung der Spule zwischen den beiden Energieversorgungsvorrichtungen und den zwei Schaltelementen, ist es möglich, die Ladezeit der Spule dynamisch anzupassen und so zu steuern. Der Erfinder hat erkannt, dass die Ladezeit der Spule im Wesentlichen der Energieentnahme aus den Energieversorgungsvorrichtungen entspricht. Durch die Möglichkeit, die Ladezeit der Spule anzupassen, kann somit auch die Energieentnahme aus den Energieversorgungsvorrichtungen der elektrischen Schaltung bzw. des elektrischen Geräts eingestellt bzw. gesteuert werden. Auf diese Weise wird es möglich, die beiden Energieversorgungsvorrichtungen unterschiedlich zu belasten bzw. unterschiedlich viel elektrische Energie zu entnehmen. Das erste und das zweite Schaltelement können vorzugsweise als MOS-FETs ausgestaltet sein. Es ist im Sinne der Erfindung bevorzugt, dass das erste und das zweite Schaltelement jeweils eine Energieversorgungsvorrichtung und die Spule überbrücken können, so dass die Ladezeit der Spule verändert bzw. eingestellt werden kann. Vorzugsweise wird die Spule im Sinne der Erfindung bevorzugt auch als "Induktivität" bezeichnet, wobei die Spule insbesondere dazu eingerichtet ist, mit elektrischem Strom aufgeladen zu werden. Durch die Variierung der Ladezeiten der Spule können vorteilhafterweise die Energieversorgungsvorrichtungen der elektrischen Schaltung unterschiedlich belastet werden, d.h. es kann dadurch unterschiedlich viel elektrische Energie aus den Energieversorgungsvorrichtungen entnommen werden.

Es ist im Sinne der Erfindung bevorzugt, dass die elektrische Schaltung dazu eingerichtet ist, die beiden Energieversorgungsvorrichtungen unterschiedlich zu belasten und dadurch den Ladezustand anzugleichen.

Die Fähigkeit, die Ausgangsspannung U_B der elektrischen Schaltung hochzusetzen, ist insbesondere darauf zurückzuführen, dass die Spule in Reihe geschaltet mit der ersten Energieversorgungsvorrichtung und der zweiten Energieversorgungsvorrichtung vorliegt und darauf, dass das erste Schaltelement dazu eingerichtet ist, die erste Energieversorgungsvorrichtung und die Spule zu überbrücken, während das zweite Schaltelement dazu eingerichtet ist, die zweite Energieversorgungsvorrichtung und die Spule zu überbrücken.

Es ist im Sinne der Erfindung bevorzugt, dass das dritte Schaltelement dazu eingerichtet ist, einen Zustand der elektrischen Schaltung ein- oder auszuschalten, wobei in diesem Zustand eine Ausgangsspannung U_B der elektrischen Schaltung, die an den Anschluss-Stellen anliegt, größer ist als eine Summe der ersten Spannung U1 der ersten Energieversorgungsvorrichtung und der zweiten Spannung U2 der ersten Energieversorgungsvorrichtung. Dieser Zustand wird im Sinne der Erfindung bevorzugt auch als "Boost-Zustand" bezeichnet. Vorzugsweise ist das dritte Schaltelement dazu eingerichtet ist, als Boost-Schaltelement bzw. Boost-Diode zu fungieren. Die Erhöhung der Ausgangsspannung U_B auf einen Wert, der größer ist als die Summe der Spannungen der beiden Energieversorgungsvorrichtungen, wird im Sinne der Erfindung als "Boost" bezeichnet. Vorzugsweise ist die erste Energieversorgungsvorrichtung dazu eingerichtet, die erste Spannung U1 bereitzustellen, während die zweite Energieversorgungsvorrichtung dazu eingerichtet ist, die zweite Spannung U2 bereitzustellen. Durch die vorteilhafte Ausgestaltung der vorgeschlagenen elektrischen Schaltung kann eine Ausgangsspannung U_B bereitgestellt werden, die größer ist als eine Summe der Einzelspannungen. In diesem Boost-Zustand gilt die Relation

$$U\_B > U1 + U2.$$

Es ist im Sinne der Erfindung bevorzugt, dass das erste Schaltelement und/oder das zweite Schaltelement als Metall-Oxid-Halbleiter-Feldeffektransistor (MOS-FET) ausgebildet ist/sind. Das erste Schaltelement und/oder das zweite Schaltelement kann/können bevorzugt auch als Feldeffektransistoren (FET) oder Bipolartransistoren mit isolierter Gate-Elektrode (IGBT) ausgebildet sein. Das dritte Schaltelement kann vorzugsweise als Diode ausgebildet sein. Das dritte Schaltelement kann allerdings auch als MOS-FET ausgebildet sein, wie in den Figuren dargestellt.

In einem zweiten Aspekt betrifft die Erfindung ein elektrisches Gerät, insbesondere eine Werkzeugmaschine, wobei das elektrische Gerät eine vorgeschlagene elektrische Schaltung umfasst. Die für die elektrische Schaltung beschriebenen Definitionen, technischen Wirkungen und Vorteile gelten für das elektrische Gerät analog. Das elektrische Gerät weist insbesondere zwei Energieversorgungsvorrichtungen auf, die auch Bestandteil der elektrischen Schaltung sein können. Mit der Erfindung kann die in den Energieversorgungsvorrichtungen zur Verfügung stehende Ladung bzw. elektrische Energie in einem höheren Grad für das elektrische Gerät nutzbar gemacht werden, so dass die in den Energieversorgungsvorrichtungen enthaltene Energie besser genutzt werden kann als bei konventionellen elektrischen Geräten, wie sie aus dem Stand der Technik bekannt sind.

Es ist im Sinne der Erfindung bevorzugt, dass die Energieversorgungsvorrichtungen, deren Ladestände ausgeglichen werden sollen, gleiche oder im Wesentlichen gleiche Nominalspannungen aufweisen. Es kann aber im Sinne der Erfindung auch bevorzugt sein, dass die Energieversorgungsvorrichtungen unterschiedliche Nominalspannungen aufweisen. Beispielsweise können im Kontext der vorliegenden Erfindung zwei unterschiedliche Energieversorgungsvorrichtungen mit Spannungen von 12 V und 36 V miteinander in einer Werkzeugmaschine vorliegen. Bei solchen Kombinationen von Energieversorgungsvorrichtungen mit verschiedenen Ausgleichsspannungen kann angestrebt werden, dass die Energieversorgungsvorrichtungen nach dem Ausgleichsvorgang gleiche oder im Wesentlichen gleich Ladezustände aufweisen. Es kann aber auch bevorzugt sein, dass sich die Ladestände lediglich angleichen. Der Begriff "angleiche" bedeutet im Sinne der Erfindung bevorzugt, dass eine Differenz der Ladestände zwischen den Energieversorgungsvorrichtungen verringert wird.

Es ist im Sinne der Erfindung bevorzugt, dass die mit der Erfindung bereitzustellende Leistung der Summe der Einzelleistungen der beiden Energieversorgungsvorrichtungen entspricht.

Durch die Erfindung kann die gesamte in den Energieversorgungsvorrichtungen gespeicherte Energie umgesetzt und für den Betrieb der Werkzeugmaschine genutzt werden. Dadurch kann vorteilhafterweise die Laufzeit der Werkzeugmaschine verlängert werden, ohne dass die Energieversorgungsvorrichtungen ausgetauscht oder aufgeladen werden müssen.

Weitere Vorteile ergeben sich aus der folgenden Figurenbeschreibung. In den Figuren ist ein Ausführungsbeispiel der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigt:

Fig. 1      schematische Darstellung eines Ausführungsbeispiels der elektrischen Schaltung

Fig. 2      schematische Darstellung eines Ausführungsbeispiels der elektrischen Schaltung

**Ausführungsbeispiele und Figurenbeschreibung:**

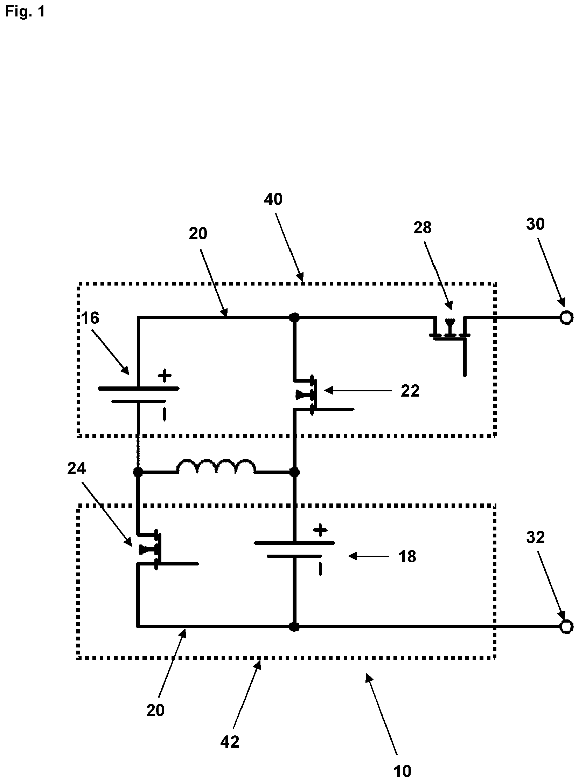

Fig. 1 zeigt eine beispielhafte Ausgestaltung der vorgeschlagenen elektrischen Schaltung 10. Die elektrische Schaltung 10 weist eine erste Energieversorgungsvorrichtung 16 und eine zweite Energieversorgungsvorrichtung 18 auf, sowie eine Spule 26. Darüber hinaus umfasst die elektrische Schaltung 10 ein erstes Schaltelement 22, ein zweites Schaltelement 24 und ein drittes Schaltelement 28.

Die vorgeschlagene elektrische Schaltung 10 kann mit Hilfe einer oberen Hälfte 40 und einer unteren Hälfte 42 beschrieben werden. Diese Hälften 40, 42 der elektrischen Schaltung 10 werden in Figur 1 durch die Rechtecke mit den gestrichelten Seitenlinien dargestellt. Die obere Hälfte 40 und die untere Hälfte 42 der elektrischen Schaltung 10 werden von der Spule 26 voneinander getrennt, wobei die Spule 26 in Reihe zu den Energieversorgungsvorrichtungen 16, 18 der elektrischen Schaltung 10 angeordnet vorliegt. Jede der beiden Hälften 40, 42 der elektrischen Schaltung 10 umfasst eine Energieversorgungsvorrichtung 16, 18 und ein Schaltelement 22, 24. Beispielsweise kann die obere Hälfte 40 der elektrischen Schaltung 10 die erste Energieversorgungsvorrichtung 16 und das erste Schaltelement 22 umfassen, wobei die erste Energieversorgungsvorrichtung 16 und das erste Schaltelement 22 über die Spule 26 und eine elektrische Leitung 20 miteinander verbunden sind. Dabei liegt die elektrische Leitung 20 insbesondere zwischen dem Pluspol "+" der ersten Energieversorgungsvorrichtung 16 und dem ersten Schaltelement 22 angeordnet vor, während die Spule 26 zwischen dem Minuspol "-" der ersten Energieversorgungsvorrichtung 16 und dem ersten Schaltelement 22 angeordnet vorliegt. Auf der anderen Seite der elektrischen Schaltung 10 kann die untere Hälfte 42 der elektrischen Schaltung 10 die zweite Energieversorgungsvorrichtung 18 und das zweite Schaltelement 24 umfassen, wobei die zweite Energieversorgungsvorrichtung 18 und das zweite Schaltelement 24 über die Spule 26 und eine elektrische Leitung 20 miteinander verbunden sind. Dabei liegt die elektrische Leitung 20 insbesondere zwischen dem Minuspol "-" der zweiten Energieversorgungsvorrichtung 18 und dem zweiten Schaltelement 24 angeordnet vor, während die Spule 26 zwischen dem Pluspol "+" der zweiten Energieversorgungsvorrichtung 18 und dem zweiten Schaltelement 24 angeordnet vorliegt.

Die obere Hälfte 40 und die untere Hälfte 42 der elektrischen Schaltung 10 werden von der Spule 26 voneinander getrennt. Das dritte Schaltelement 28 kann entweder in der oberen Hälfte 40 oder in der unteren Hälfte 42 der elektrischen Schaltung 10 angeordnet vorliegen. In dem in den Figuren dargestellten Ausführungsbeispiel der Erfindung liegt das dritte Schaltelement 28 in der oberen Hälfte 42 der elektrischen Schaltung 10 angeordnet vor.

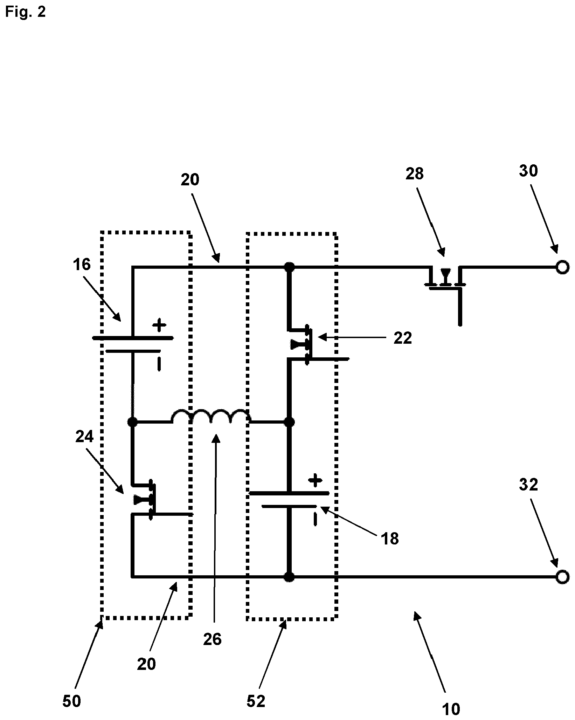

Die vorgeschlagene elektrische Schaltung 10 kann auch zusammengesetzt aus einem vorderen Strang 50 und einem hinteren Strang 52 beschrieben werden. Diese Stränge 50, 52 der elektrischen Schaltung 10 werden in Figur 2 durch die Rechtecke mit den gestrichelten Seitenlinien dargestellt. Der vordere Strang 50 der elektrischen Schaltung 10 umfasst die erste Energieversorgungsvorrichtung 16 und das zweite Schaltelement 24, während der hintere Strang 52 die zweite Energieversorgungsvorrichtung 18 und das erste Schaltelement 22 umfasst. Zwischen den beiden Strängen 50, 52 liegt die Spule 26 angeordnet vor und trennt die Stränge 50, 52 der elektrischen Schaltung 10 voneinander. Dabei liegen die erste Energieversorgungsvorrichtung 16 und das erste Schaltelement 22 auf der Oberseite 40 der elektrischen Schaltung 10 vor, also oberhalb der Spule 26, während die zweite Energieversorgungsvorrichtung 18 und das zweite Schaltelement 24 auf der Unterseite 44 der elektrischen Schaltung 10 angeordnet vorliegen, also unterhalb der Spule 26.

**Bezugszeichenliste**

10 elektrische Schaltung
16 erste Energieversorgungsvorrichtung
18 zweite Energieversorgungsvorrichtung
20 elektrische Leitung
22 erstes Schaltelement
24 zweites Schaltelement
26 Spule
28 drittes Schaltelement
30 erste Anschluss-Stelle
32 zweite Anschluss-Stelle
40 obere Hälfte der elektrischen Schaltung
42 untere Hälfte der elektrischen Schaltung
50 vorderer Strang der elektrischen Schaltung
52 hinterer Strang der elektrischen Schaltung

**Patentansprüche**

1. Elektrische Schaltung (10) zum Steuern einer Energieentnahme aus einer ersten Energieversorgungsvorrichtung (16) und aus einer zweiten Energieversorgungsvorrichtung (18) in einem elektrischen Gerät, insbesondere in einer Werkzeugmaschine **gekennzeichnet dadurch, dass**
die elektrische Schaltung (10) eine erste Energieversorgungsvorrichtung (16) und eine zweite Energieversorgungsvorrichtung (18), sowie ein erstes Schaltelement (22), ein zweites Schaltelement (24) und ein drittes Schaltelement (28), eine Spule (26) und zwei Anschluss-Stellen (30, 32) umfasst, wobei die Spule (26) in Reihe geschaltet mit der ersten Energieversorgungsvorrichtung (16) und der zweiten Energieversorgungsvorrichtung (18) vorliegt und wobei das erste Schaltelement (22) dazu eingerichtet ist, die erste Energieversorgungsvorrichtung (16) und die Spule (26) zu überbrücken, und das zweite Schaltelement (24) dazu eingerichtet ist, die zweite Energieversorgungsvorrichtung (18) und die Spule (26) zu überbrücken.

2. Elektrische Schaltung (10) nach Anspruch 1 **gekennzeichnet dadurch, dass**
das erste Schaltelement (22) und/oder zweites Schaltelement (24) als MOS-FET ausgebildet ist/sind.

3. Elektrische Schaltung (10) nach Anspruch 1 oder 2 **gekennzeichnet dadurch, dass**
das dritte Schaltelement (28) als Diode ausgebildet ist.

4. Elektrische Schaltung (10) nach einem der vorhergehenden Ansprüche
**gekennzeichnet dadurch, dass**
das dritte Schaltelement (28) dazu eingerichtet ist, einen Zustand der elektrischen Schaltung (10) ein- oder auszuschalten, wobei in dem Zustand eine Ausgangsspannung U_B der elektrischen Schaltung (10), die an den Anschluss-Stellen (30, 32) anliegt, größer ist als eine Summe der ersten Spannung U1 der ersten Energieversorgungsvorrichtung (16) und der zweiten Spannung U2 der ersten Energieversorgungsvorrichtung (16).

5. Elektrisches Gerät
**gekennzeichnet dadurch, dass**
das elektrische Gerät eine elektrische Schaltung (10) nach einem der vorhergehenden Ansprüche umfasst.

6. Elektrisches Gerät nach Anspruch 5
**gekennzeichnet dadurch, dass**
das elektrische Gerät eine Werkzeugmaschine ist.

**Fig. 1**

**Fig. 2**

Europäisches
Patentamt

European
Patent Office

Office européen
des brevets

# EUROPÄISCHER RECHERCHENBERICHT

**Nummer der Anmeldung**

**EP 22 17 3948**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2022/069277 A1 (RENAULT SAS [FR]) 7. April 2022 (2022-04-07) | 1-3,5,6 | INV. H02J7/00 |
| A | * Ansprüche 1-10; Abbildung 1 * | 4 | |

-----

**RECHERCHIERTE SACHGEBIETE (IPC)**

**H02J**

Der vorliegende Recherchenbericht wurde für alle Patentansprüche erstellt

| Recherchenort | Abschlußdatum der Recherche | Prüfer |
|---|---|---|
| München | 28. Oktober 2022 | Meyer, Andreas Hans |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

....................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 17 3948

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-10-2022

| Im Recherchenbericht angeführtes Patentdokument | Datum der Veröffentlichung | Mitglied(er) der Patentfamilie | Datum der Veröffentlichung |
|---|---|---|---|
| WO 2022069277 A1 | 07-04-2022 | FR 3114918 A1<br>WO 2022069277 A1 | 08-04-2022<br>07-04-2022 |

Für nähere Einzelheiten zu diesem Anhang : siehe Amtsblatt des Europäischen Patentamts, Nr.12/82

EPO FORM P0461